# EUROPÄISCHE PATENTSCHRIFT

(11) **EP 0 465 470 B1**
(45) Veröffentlichungstag und Bekanntmachung des Hinweises auf die Patenterteilung: **04.05.1994**
(21) Anmeldenummer: 90902771.6
(22) Anmeldetag: 09.02.1990
(51) Int. Cl.: B60T 8/00

(54) **ANTIBLOCKIERREGELSYSTEM**
AN ANTI-LOCK REGULATING SYSTEM
ANTIDERAPEUR AUTOMATIQUE

(30) Priorität: 30.03.1989 DE 3910209
(43) Veröffentlichungstag der Anmeldung: 15.01.1992
(73) Patentinhaber: ROBERT BOSCH GMBH, 70442 Stuttgart (DE)
(72) Erfinder: MÜLLER, Elmar, D-7145 Markgröningen (DE); MÜLLER, Werner, Nishi-ku F220, Yokohama (JP)
(86) Internationale Anmeldenummer: EP9000204
(87) Internationale Veröffentlichungsnummer: WO9011916

(56) Entgegenhaltungen:
- DE-A- 2 215 608
- DE-A- 3 326 959
- DE-A- 3 644 325
- FR-A- 2 589 413
- US-A- 3 503 654

## Beschreibung

### Problematik und Stand der Technik

Bei Fahrzeugen mit ungünstigem Verhältnis von Schwerpunktshöhe zu Radstand führen extreme dynamische Achslastverlagerungen, insbesondere bei hohen Verzögerungen zu einer starken Entlastung der Hinterachse. Läßt man diesen Sachverhalt unberücksichtigt, so führt ein von der Fahrzeugverzögerung und vom Druckniveau der Vorderachse abgekoppelter Druckaufbau an der Hinterachse unweigerlich zur Fahrzeuginstabilität.

Aus der DE-OS 22 15 608 ist es bekannt, bei mit einem ABS ausgerüsteten Fahrzeugen mit hoch liegendem Schwerpunkt und kurzem Radstand ein Überschlagen dadurch zu vermeiden, daß man eine zu große Differenz der Bremsdrücke vorn und hinten nicht zuläßt. Übersteigt diese Differenz eine vorgegebene Größe, so wird der Druck vorn nicht weiter erhöht.

### Vorteile der Erfindung

Die vorliegende Erfindung berücksichtigt die auftretende dynamische Achslastverlagerung bei ABS-Betrieb und zwar durch einen Druckaufbau mit reduzierter Stärke an der Hinterachse. Kriterium hierfür ist ein zu langes Andauern des Druckaufbaus an der Vorderachse. Hierdurch wird eine hohe Regelfrequenz an der Hinterachse vermieden und die Fahrzeugstabilität verbessert.

### Figurenbeschreibung

Anhand der Zeichnung werden Ausführungsbeispiele der Erfindung erläutert.

Es zeigen:
- Fig. 1: - ein erstes gemäß der Erfindung ausgebildetes Ausführungsbeispiel eines ABS,
- Fig. 2-5: - Diagramme zur Erläuterung verschiedener Eingriffsmöglichkeiten in die Hinterachsregelung,
- Fig. 6: - ein anderes Ausführungsbeispiel.

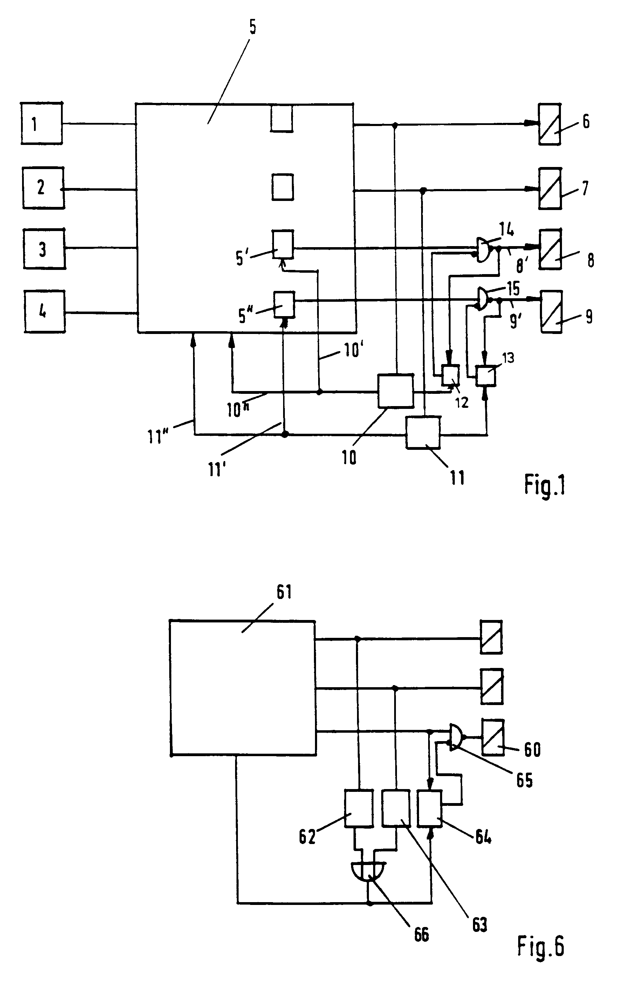

In Fig. 1 sind den Vorderrädern eines Fahrzeugs zugeordnete Sensoren mit 1 und 2 und den Hinterrädern zugeordnete Sensoren mit 3 und 4 bezeichnet. Deren Signale werden einer Auswerteschaltung 5 zugeführt, die daraus Bremsdruckregelsignale für die vier Radbremsen erzeugt. Diese Signale werden den Vorderrädern zugeordneten Magnetventilen 6 und 7 und den Hinterrädern zugeordneten Magnetventilen 8 und 9 zugeführt. Die Magnetventile 6 bis 9 sind 3/3-Ventile, die in ihrer Grundstellung die Bremsleitung durchlässig halten, in einer Zwischenschaltung diese unterbrechen und in einer dritten Stellung Druckabbau an den Bremsen bewirken.

Es wird hierzu unterstellt, daß der Druckaufbau nach einer Druckabsenkung aufgrund der Regelung gepulst erfolgt, wobei der erste Druckimpuls in seiner Größe aus der Vorgeschichte (Höhe des vorhergehenden Druckabbaus und/oder Länge des oder der vorhergehenden Druckaufbauphasen z.B. Zahl der aufgetretenen Impulse) abhängt.

Zähler 10 und 11 zählen jeweils die nach einer Druckabsenkung auftretenden Druckimpulse. Übersteigt diese Menge der gezählten Impulse eine vorgegebene Größe, so gibt der zugehörige Zähler 10 oder 11 ein Signal ab, das eine oder mehrere der folgenden Wirkungen auslösen kann:
a) Man kann das Signal dazu benutzen, einen in der Auswerteschaltung 5 enthaltenen, einer Hinterradbremse zugeordneten Impulsgeber 5' oder 5'' in seinem Tastverhältnis zu ändern (Leitungen 10' oder 11'), z.B. die Haltephasen der Impulse zu erhöhen. Es wird jeweils das Taktverhältnis des Impulsgebers 5' bzw. 5'' geändert, der zu der Fahrzeugseite gehört. an der zu lange Druck aufgebaut wurde.
b) Man kann das Signal der Auswerteschaltung 5 zuführen, um dort bei zu langem Druckaufbau vorn und zwar für die zugehörige Fahrzeugseite den ersten Druckimpuls für die Hinterradbremse in einem vorgegebenen Umfang zu reduzieren, z.B. zu halbieren (Leitungen 10'' und 11'').
c) Das gemäß b) zugeführte Signal kann zusätzlich noch die Ansprechschwellen für die Druckabsenkung (z.B. Radverzögerungsschwelle und/oder Schlupfschwelle) für beide Hinterräder erniedrigen.
d) Man kann das Signal aber auch einem Zähler 12 bzw. 13 zuführen. Dieser wird dadurch in Betrieb gesetzt und zählt nachfolgend die auf der Ansteuerleitung 8' bzw. 9' auftretenden Bremsdruckaufbauimpulse. Nach einer vorgegebenen Zahl gibt der Zähler 10 bzw. 11 ein Signal ab, das ein Und-Gatter 14 bzw. 15 sperrt und damit das Magnetventil 8 bzw. 9 in der Druckhaltestellung hält.

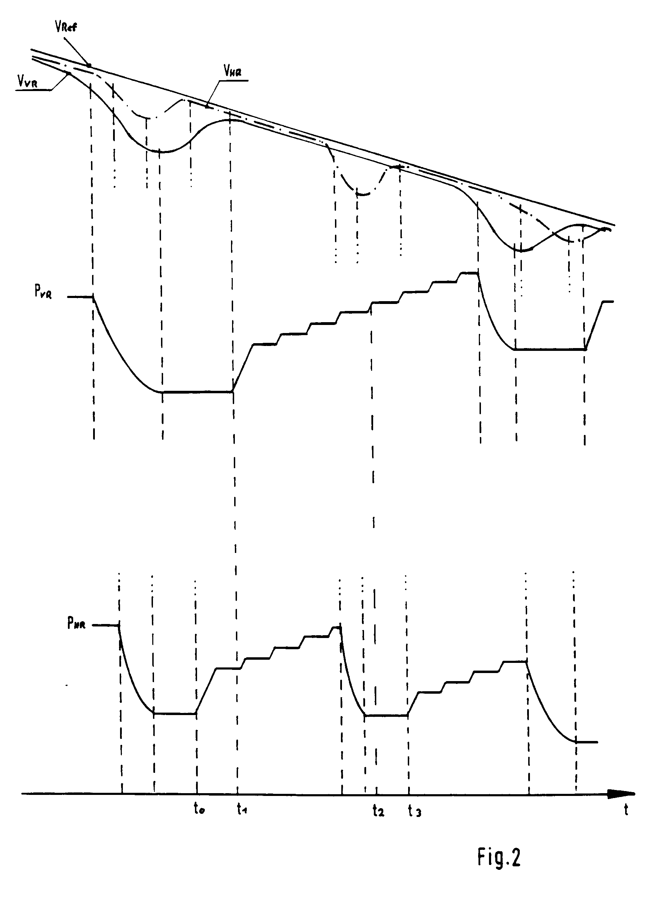

In den Fig. 2 bis 6 sind die Verhältnisse der Fälle a) bis d) für jeweils eine Fahrzeugseite dargestellt. Es sind jeweils eingezeichnet:
- V_{F}: die Fahrzeugreferenzgeschwindigkeit
- V_{VR}: die Geschwindigkeit des rechten Vorderrads
- V_{HR}: die Geschwindigkeit des rechten Hinterrads
- P_{VR}: der Bremsdruck vorn rechts
- P_{HR}: der Bremsdruck hinten rechts
In Fig. 2 (entspr. a)) fängt bei t₁ ein langer Bremsdruckanstieg an (z.B. über t₂ hinaus). Dies führt hier dazu, daß der erste Druckimpuls des folgenden Regelzyklus (bei t₃ beginnend) sehr viel kleiner als der entsprechende, bei tₒ beginnende Druckimpuls ist.

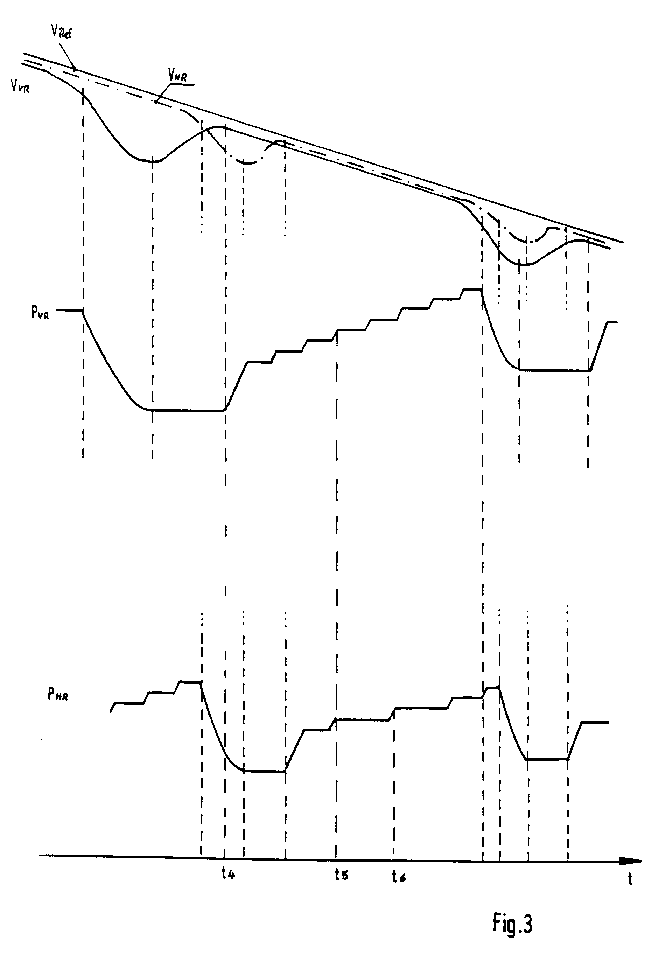

In Fig. 3 (entsprechend b)) werden, weil der bei t₄ beginnende Druckanstieg über t₅ hinaus andauert, die bei t₅ und t₆ beginnenden Haltephasen verlängert.

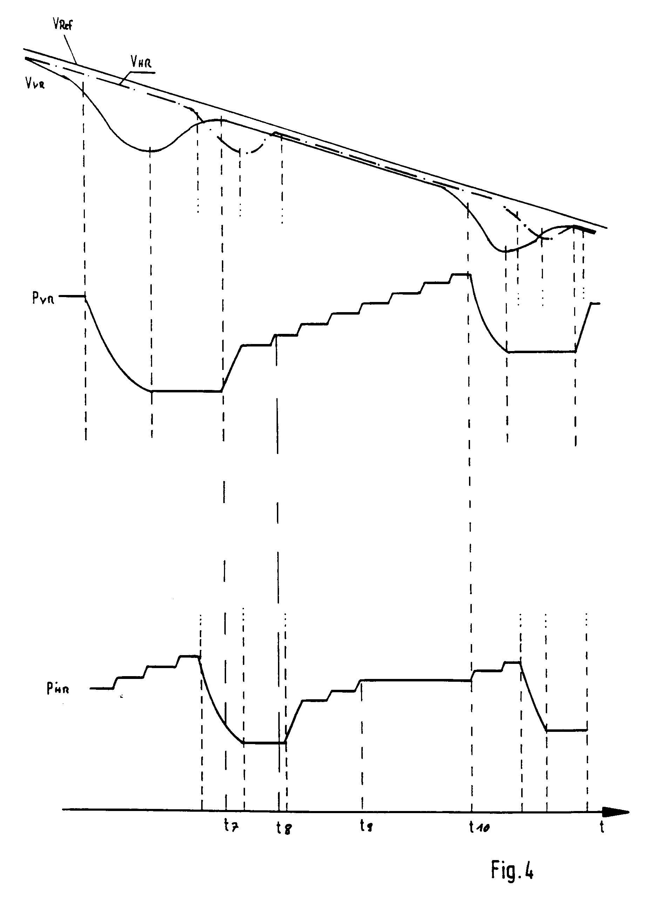

In Fig. 4 (entsprechend d)) wird bei t₈ ebenfalls festgestellt, daß der Druckaufbau rechts vorn zu lang ist (>(t₈-t₇)). Deshalb wird nach drei Druckimpulsen bei t₉ der weitere Druckanstieg gesperrt (Und-Gatter 14 bzw. 15). Da bei t₁₀ am Vorderrad wieder Druckabbau einsetzt, wird der Druckaufbau hier wieder freigegeben.

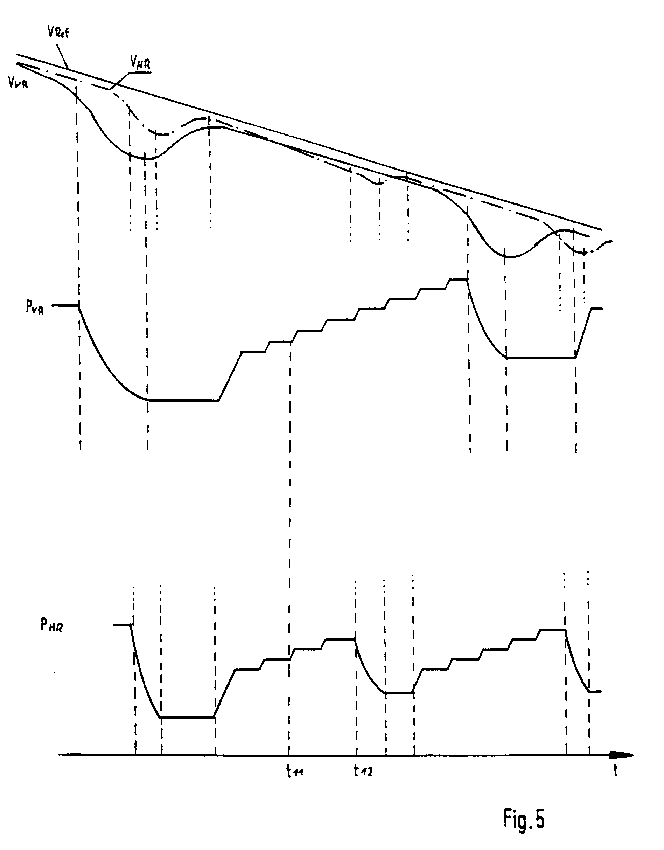

In Fig. 5 (entsprechend c)) wird, weil ebenfalls der Druckaufbau vorn zu lange andauert (über t₁₁ hinaus) die Schlupfschwelle reduziert, sodaß bereits bei der geringen Abweichung der Regelgeschwindigkeit V_{HR} von der Referenz V_{Ref} bei t₁₂ Druckabbau ausgelöst wird.

Die Fig. 6 unterscheidet sich von der Fig. 1 dadurch, daß für die Hinterradbremsen nur ein Magnetventil 60 vorgesehen ist. Hier werden in Zählern 62 bzw. 63 die Druckaufbauimpulse gezählt. Bei Erreichen einer Schwelle geben diese ein Signal ab, das über ein Oder-Gatter 66 einen Zähler 64 aktiviert, der dann die Impulse auf der Leitung zum Ventil 60 zählt. Ab Erreichen einer Schwelle wird ein UND-Gatter 65 gesperrt, sodaß das Ventil 60 undurchlässig und der Druck konstantgehalten wird. Das Signal des Oder-Gatters 66 kann auch der Auswerteschaltung 61 zugeführt werden, um dort Umschaltungen vorzunehmen.

Die Erfindung kann auch durch einen Rechner bei entsprechender Auslegung der Software realisiert werden.

## Patentansprüche

1. Antiblockierregelsystem, bei dem der Bremsdruck an der Vorderachse und an der Hinterachse getrennt geregelt und dabei gepulst aufgebaut wird und bei dem bei starker Entlastung der Hinterachsräder eine zusätzliche Beeinflussung des Bremsdrucks erfolgt, dadurch gekennzeichnet, daß bei Andauern des Bremsdruckaufbaus an der Vorderachse nach einer Bremsdruckerniedrigung über eine vorgegebene Zeit hinaus ein während dieses Bremsdruckaufbaus beginnender Bremsdruckaufbau an der Hinterachse mit reduzierter Stärke erfolgt.

2. Antiblockierregelsystem nach Anspruch 1, bei dem der Druckaufbau innerhalb eines Regelzyklus zuerst mit einem großen von der Vorgeschichte abhängigen Druckimpuls beginnt und bei dem sich daran kleinere Druckimpulse anschließen, dadurch gekennzeichnet, daß der erste Druckimpuls an der Hinterachse aufgrund des langen Druckaufbaus an der Vorderachse in seiner Größe reduziert ist.

3. Antiblockierregelsystem nach Anspruch 1 oder 2, bei dem der Druckaufbau innerhalb eines Regelzyklus zuerst mit einem großen von der Vorgeschichte abhängigen Druckimpuls beginnt und bei dem sich daran kleinere Druckimpulse anschließen, dadurch gekennzeichnet, daß die kleineren Druckimpulse an der Hinterachse wenigstens teilweise verlängerte Haltephasen aufweisen.

4. Antiblockierregelsystem nach einem der Ansprüche 1 bis 3, bei dem der Druckaufbau innerhalb eines Regelzyklus zuerst mit einem großen von der Vorgeschichte abhängigen Druckimpuls beginnt und bei dem sich daran kleinere Druckimpulse anschließen, dadurch gekennzeichnet, daß die kleineren Druckimpulse an der Hinterachse aufgrund des langen Druckaufbaus an der Vorderachse wenigstens teilweise verkürzte Druckaufbauzeiten aufweisen.

5. Antiblockierregelsystem nach einem der Ansprüche 1 bis 4, dadurch gekennzeichnet, daß der Druckaufbau an der Hinterachse aufgrund des langen Druckaufbaus an der Vorderachse nach einer vorgegebenen Zeit abgebrochen wird.

6. Antiblockierregelsystem nach Anspruch 5, bei dem der Druckaufbau innerhalb eines Regelzyklus zuerst mit einem großen, von der Vorgeschichte abhängigen Druckimpuls beginnt und bei dem sich daran kleinere Druckimpulse anschließen, dadurch gekennzeichnet, daß nach einer vorgegebenen Anzahl von Druckimpulsen abgebrochen wird.

7. Antiblockierregelsystem nach einem der Ansprüche 1 bis 6, dadurch gekennzeichnet, daß zusätzlich bei einem zu langen Druckaufbau an der Vorderachse wenigstens eine Druckabbauschwelle für die Regelung an der Hinterachse herabgesetzt wird.

8. Antiblockierregelsystem nach einem der Ansprüche 1 bis 7, dadurch gekennzeichnet, daß es an der Vorderachse eine individuelle Regelung des Drucks der Radbremsen und an der Hinterachse eine gemeinsame Regelung des Drucks aufweist (vorzugsweise select-low), wobei eine zu lange Aufbauphase an einer Vorderradbremse die reduzierte Stärke an den Hinterradbremsen auslöst.

9. Antiblockierregelsystem nach einem der Ansprüche 1 bis 7, dadurch gekennzeichnet, daß es eine individuelle Regelung aller Radbremsdrücke aufweist und daß ein zu langer Druckaufbau an einer Vorderradbremse einen reduzierten Druckaufbau an der Bremse des auf der gleichen Fahrzeugseite liegenden Hinterrads auslöst.

## Claims

1. Anti-lock control system, in which the brake pressure at the front axle and at the rear axle is controlled separately and built up in pulsed fashion and in which, in the case of a pronounced relief of the load on the rear axle wheels, an additional influencing of the brake pressure is effected, characterized in that, if the brake pressure build-up at the front axle after a brake pressure reduction continues beyond a predetermined time, a brake pressure build-up at the rear axle beginning during this brake pressure build-up is effected with reduced intensity.

2. Anti-lock control system according to Claim 1, in which the pressure build-up within a control cycle begins first of all with a large pressure pulse dependent on the prehistory and in which smaller pressure pulses follow said pulse, characterized in that the first pressure pulse at the rear axle is reduced in its magnitude due to the long pressure build-up at the front axle.

3. Anti-lock control system according to Claim 1 or 2, in which the pressure build-up within a control cycle begins first of all with a large pressure pulse dependent on the prehistory and in which smaller pressure pulses follow said pulse, characterized in that the smaller pressure pulses at the rear axle have at least partially prolonged holding phases.

4. Anti-lock control system according to one of Claims 1 to 3, in which the pressure build-up within a control cycle begins first of all with a large pressure pulse dependent on the prehistory and in which smaller pressure pulses follow said pulse, characterized in that, due to the long pressure build-up at the front axle, the smaller pressure pulses at the rear axle have at least partially shortened pressure build-up times.

5. Anti-lock control system according to one of Claims 1 to 4, characterized in that the pressure build-up at the rear axle is broken off after a predetermined time due to the long pressure build-up at the front axle.

6. Anti-lock control system according to Claim 5, in which the pressure build-up within a control cycle begins first of all with a large pressure pulse dependent on the prehistory and in which smaller pressure pulses follow said pulse, characterized in that breaking off is effected after a predetermined number of pressure pulses.

7. Anti-lock control system according to one of Claims 1 to 6, characterized in that, in addition, at least one pressure reduction threshold for control at the rear axle is lowered in the case of an excessively long pressure build-up at the front axle.

8. Anti-lock control system according to one of Claims 1 to 7, characterized in that it has individual control of the pressure of the wheel brakes at the front axle and common control of the pressure at the rear axle (preferably select-low), an excessively long build-up phase at a front wheel brake triggering the reduced intensity at the rear wheel brakes.

9. Anti-lock control system according to one of Claims 1 to 7, characterized in that it has individual control of all wheel brake pressures and in that an excessively long pressure build-up at a front wheel brake triggers a reduced pressure build-up at the brake of the rear wheel on the same vehicle side.

## Revendications

1. Système anti-blocage selon lequel on regle de manière séparée la pression de frein de l'essieu avant et de l'essieu arrière, en l'établissant de manière impulsionnelle et dans lequel, pour une décharge plus forte de l'essieu arrière, on influence de manière supplémentaire la pression de frein, système caractérisé en ce que si la pression de frein continue d'augmenter sur l'essieu avant, après une diminution de la pression de frein pendant une durée prédéterminée, la pression de frein augmente avec une intensité réduite sur l'essieu arrière, commençant pendant cette montée de la pression de frein sur l'essieu avant.

2. Système de régulation anti-blocage selon la revendication 1 selon lequel la montée de la pression dans un cycle de régulation commence tout d'abord par une impulsion de pression dont l'amplitude dépend de l'histoire antérieure, suivie d'impulsions de pression plus petites, système caractérisé en ce que la première impulsion de pression sur l'essieu arrière est d'amplitude réduite du fait de la montée en pression, prolongée, sur l'essieu avant.

3. Système de régulation anti-blocage selon la revendication 1 ou 2, selon lequel la montée de la pression à l'intérieur d'un cycle de régulation commence tout d'abord par une impulsion de pression dont l'amplitude dépend de l'histoire antérieure, suivie d'impulsions de pression plus petites, système caractérisé en ce que les impulsions de pression plus petites sur l'essieu arrière présentent des phases de retenue au moins partiellement prolongées.

4. Système de régulation anti-blocage selon l'une des revendications 1 à 3, selon lequel la montée en pression dans un cycle de régulation commence tout d'abord par une impulsion de pression dont l'amplitude dépend de l'histoire antérieure, suivie d'impulsions de pression plus petites, système caractérisé en ce que sur l'essieu arrière les impulsions de pression plus petites présentent des temps de montée en pression au moins partiellement réduits du fait de la montée en pression, longue, sur l'essieu avant.

5. Système de régulation anti-blocage selon l'une des revendications 1 à 4, caractérisé en ce que la montée en pression sur l'essieu arrière est arrêtée après un temps prédéterminé à cause de la montée en pression, longue, sur l'essieu avant.

6. Système de régulation anti-blocage selon la revendication 5, selon lequel la montée en pression dans un cycle de régulation commence tout d'abord par une impulsion de pression, importante, dépendant de l'histoire antérieure, suivie d'impulsions de pression plus petites, système caractérisé en ce qu'on arrête après un nombre prédéterminé d'impulsions de pression.

7. Système de régulation anti-blocage selon l'une des revendications 1 à 6, caractérisé en ce qu'en plus pour une montée en pression longue sur l'essieu avant, on diminue au moins un seuil de diminution de pression pour la régulation sur l'essieu arrière.

8. Système de régulation anti-blocage selon l'une des revendications 1 à 7, caractérisé par une régulation individuelle de la pression des freins de roues sur l'essieu avant et une régulation commune de la pression sur l'essieu arrière (de préférence select-low), une phase de montée trop longue sur un frein de roue avant commandant une intensité réduite sur les freins des roues arrière.

9. Système de régulation anti-blocage selon l'une des revendications 1 à 7, caractérisé en ce qu'il comporte une régulation individuelle de toutes les pressions de freins de roues et en ce qu'une montée de pression trop longue sur un frein de roue avant déclenche une montée en pression réduite des freins de la roue arrière située du même côté du véhicule.
